# EUROPEAN PATENT APPLICATION

(11) **EP 4 404 310 A1**
(43) Date of publication of application: **24.07.2024**
(21) Application number: 23739859.9
(22) Date of filing: 04.01.2023
(51) Int. Cl.: H01M 4/66

(54) **APPARATUS AND METHOD FOR PREPARING CURRENT COLLECTOR ASSEMBLY**

(30) Priority: 14.01.2022 CN 202210040579
(71) Applicant: Contemporary Amperex Technology Co., Limited, Ningde, Fujian 352100 (CN)
(72) Inventor: LI, Keqiang, Ningde, Fujian 352100 (CN); LIU, Xiaosong, Ningde, Fujian 352100 (CN); WU, Zhiyang, Ningde, Fujian 352100 (CN); LU, Yi, Ningde, Fujian 352100 (CN)
(74) Representative: Gong, Jinping
(86) International application number: PCT/CN2023/070395
(87) International publication number: WO 2023/134515

(57) **Abstract**

A device and a method for preparing a current collector assembly are disclosed in embodiments of the present application. The device includes: a first feeding apparatus used for providing a transfer film, the transfer film having a base layer and a metal layer formed thereon; a second feeding apparatus used for providing a bottom film, the bottom film having a first surface and a second surface opposite to the first surface; a coating apparatus used for applying an adhesive on the first surface to obtain a base film; and a transfer apparatus used for transferring the metal layer to the base film to obtain the current collector assembly. The device provided by the present application can be used for manufacturing a current collector assembly. The metal layer is transferred from the transfer film to the base film through the adhesive to prepare the current collector assembly, so that a light and thin current collector assembly can be efficiently prepared, and the physical and chemical properties of the base film are not affected during the transfer process, which is beneficial to the integrity and stability of the base film, thereby improving the mechanical properties of the current collector assembly.

## Description

### Cross-Reference to Related Application

The patent document claims the priority and rights to Chinese Patent Application No. 202210040579.9 filed on January 14, 2022 and entitled "DEVICE AND METHOD FOR PREPARING CURRENT COLLECTOR ASSEMBLY". The entire content of the patent application is incorporated by reference as part of the disclosure of the present patent document.

### Technical Field

The present application relates to the field of batteries, and more specifically, to a device and a method for preparing a current collector assembly.

### Background

In recent years, batteries are widely applied in energy storage power source systems such as water power, thermal power, wind power, and solar power stations, as well as power tools, electric bicycles, electric motorcycles, electric vehicles, military devices, aerospace, and other fields, thereby being greatly developed.

As an important component in batteries, current collectors have also developed rapidly. Traditional current collectors are usually copper foils or aluminum foils. However, the thickness of a copper foil or an aluminum foil is limited by the processing technology and cannot meet requirements of electronic products of being increasingly lighter, thinner, and miniaturized. Therefore, how to effectively prepare a lighter and thinner current collector is an urgent problem to be solved.

### Summary of the Invention

Embodiments of the present application provide a device and a method for preparing a current collector assembly, which is capable of efficiently preparing a light and thin current collector assembly, and is capable of helping improve the quality of the current collector assembly.

In a first aspect, a device for preparing a current collector assembly is provided, including: a first feeding apparatus used for providing a transfer film, the transfer film having a base layer and a metal layer formed thereon; a second feeding apparatus used for providing a bottom film, the bottom film having a first surface and a second surface opposite to the first surface; a coating apparatus used for applying an adhesive on the first surface to obtain a base film; and a transfer apparatus used for transferring the metal layer to the base film to obtain the current collector assembly.

In the embodiments of the present application, the metal layer of the transfer film has a processing method different from that of a metal foil, its thickness is not limited by a calendering process, and a very thin metal layer can be formed on the base layer. The device for preparing the current collector peels off the metal layer on the transfer film and combines it with the base film through adhesive bonding, so as to obtain a current collector assembly composed of the base film and the metal layer. The current collector assembly is capable of being used for preparing the current collector. On the one hand, the preparation of a current collector assembly with a thinner metal layer helps achieve the preparation of a thin and light current collector; on the other hand, the transfer of the metal layer through the adhesive is a fast and simple process, which is capable of improving the production efficiency of current collector assembly and the productivity of the device for preparing the current collector assembly. Moreover, the bonding process will not have a destructive effect on physical and chemical properties of the base film, thereby ensuring the mechanical performance of the current collector assembly.

In some embodiments, the base layer is a release film.

In the embodiments of the present application, a release film is used as the base layer. The release film has a relatively smooth surface and relatively stable physical and chemical properties at high temperatures, which facilitates the transfer of the metal layer formed on it and improves the production efficiency and product quality of the current collector assembly.

In some embodiments, the bottom film is a polymeric film.

In the embodiments of the present application, a polymeric film is used as the bottom film. The polymeric film has the characteristics of being light and thin, so that the prepared current collector assembly is lighter and thinner, which facilitates the preparation of a light and thin current collector.

In some embodiments, the transfer apparatus transfers the metal layer to the base film by mechanical peeling.

In the embodiments of the present application, mechanical peeling is used to transfer the metal layer. The mechanical peeling is capable of being performed at room temperature to avoid a high-temperature process and is capable of effectively ensuring the mechanical performance of the base film, thereby improving the mechanical performance of the current collector assembly.

In some embodiments, the transfer apparatus transfers the metal layer to the base film through chemical peeling.

In some embodiments, the transfer apparatus includes: a pressure roller and a first roller, the pressure roller and the first roller roll the transfer film and the base film so that the metal layer is transferred to the base film.

In the embodiment of the present application, the transfer film is brought into close contact with the base film through pressure rolling, and the adhesive on the base film is capable of peeling off the metal layer from the transfer film through an adhesive force. The pressure rolling method helps the metal layer to be peeled off more evenly and more closely combined with the base film, thereby further improving the mechanical performance of the current collector assembly.

In some embodiments, the transfer apparatus includes: a heating roller and a second roller, the heating roller and the second roller heat and roll the transfer film and the base film so that the metal layer is transferred to the base film.

In the embodiment of the present application, the transfer film is brought into close contact with the base film through heat rolling, and the adhesive on the base film peels off the metal layer from the transfer film through an adhesive force under the dual action of heating and pressure. On the basis of the pressure, heating is further used to keep the bonding performance of the adhesive in the best state, so that the peeling of the metal layer is more complete and the peeling process is more efficient.

In some embodiments, the first feeding apparatus and the second feeding apparatus have the same structure.

In embodiments of the present application, the first feeding apparatus and the second feeding apparatus may adopt the same structure, for example, both adopt a roll-to-roll structure, which facilitates the integration of the device for preparing a current collector assembly.

In some embodiments, the first feeding apparatus includes: a first unwinding roll used for conveying the transfer film in a first feeding direction; a first winding roll used for collecting the transfer film after passing through the transfer apparatus; and at least one first guide roller, arranged between the first unwinding roll and the first winding roll in the first feeding direction, the first guide roller being used for supporting the transfer film, so that the transfer film is transported according to an arrangement path of the first guide roller.

In the embodiment of the present application, the first feeding apparatus is a roll-to-roll feeding apparatus, which is capable of continuously and efficiently transporting the transfer film to the transfer apparatus to prepare the current collector assembly, and is capable of controlling the rotation speeds or directions of the first unwinding roll and first winding roll, thereby flexibly controlling a movement state of the transfer film to help improve the efficiency of preparing the current collector assembly.

In some embodiments, the second feeding apparatus includes: a second unwinding roll, used for transporting the bottom film in a second feeding direction; a second winding roll, used for collecting the current collector assembly; and at least one second guide roller arranged between the second unwinding roll and the second winding roll in the second feeding direction, the second guide roller being used for supporting the bottom film or the current collector assembly so that the bottom film or the current collector assembly is transported according to an arrangement path of the second guide roller.

In the embodiment of the present application, the second feeding apparatus is a roll-to-roll feeding apparatus, which is capable of continuously and efficiently transporting the bottom film to the coating apparatus to prepare the base film, and transporting the base film to the transfer apparatus to prepare the current collector assembly; and is capable of controlling the rotation speeds or directions of the second unwinding roll and the second winding roll, thereby flexibly controlling movement states of the bottom film, the base film, and the current collector assembly, and helping improve the efficiency of preparing the current collector.

In some embodiments, the device is an integrated device.

In the embodiment of the present application, the device for preparing a current collector assembly is an integrated device, and each apparatus is capable of being integrated into the device. The prepared current collector assembly can be obtained directly through one device, which saves time and device costs of transferring materials between various apparatuses, thereby helping improve the preparation efficiency of the current collector assembly.

In a second aspect, a method for preparing a current collector assembly is provided, including: providing a transfer film, the transfer film having a base layer and a metal layer formed thereon; providing a bottom film, the bottom film having a first surface and a second surface opposite to the first surface; applying an adhesive on the first surface to obtain a base film; and transferring the metal layer to the base film to obtain the current collector assembly.

In the embodiment of the present application, a current collector assembly is prepared by transferring a thin metal layer on the transfer film to the base film. The obtained current collector assembly has a thin metal layer and is capable of being used for preparing a light and thin current collector. The metal layer is peeled off from the transfer film by the adhesive and is bonded to the base film. The process is simple and fast, which improves the efficiency of preparing the current collector assembly, contributes to the mass production of current collector assemblies, and will not cause irreversible effects to physical and chemical properties of the base film, thereby ensuring the mechanical performance of the current collector assembly.

In some embodiments, the transfer film is obtained by electroplating the metal layer on the base layer.

In the embodiments of the present application, electroplating performed on the base layer is capable of quickly forming a thin metal layer on the base layer, and the thickness of the metal layer can be controlled according to parameters such as the electroplating time.

In some embodiments, the transfer film is obtained by evaporating the metal layer onto the base layer.

In the embodiments of the present application, the base layer has good stability at high temperatures, and its physical and chemical performance will not be affected by the high temperature during evaporation. Evaporation onto the base layer is capable of preparing a uniform and thin metal layer on the base layer, and the thickness of the metal layer can be controlled according to parameters such as the evaporation time.

In some embodiments, the base layer is a release film.

In the embodiments of the present application, a release film is used as the base layer. The release film has a relatively smooth surface and relatively stable physical and chemical properties at high temperatures, which facilitates the transfer of the metal layer formed on it and improves the production efficiency and product quality of the current collector assembly.

In some embodiments, the bottom film is a polymeric film.

In the embodiments of the present application, a polymeric film is used as the bottom film. The polymeric film has the characteristics of being light and thin, so that the prepared current collector assembly is lighter and thinner, which facilitates the preparation of a light and thin current collector.

In some embodiments, the transferring the metal layer to the base film includes: transferring the metal layer to the base film by mechanical peeling.

In the embodiments of the present application, mechanical peeling is used to transfer the metal layer, which is capable of being performed at room temperature to avoid a high-temperature process and is capable of effectively ensuring the mechanical performance of the base film, thereby improving the mechanical performance of the current collector assembly.

In some embodiments, the transferring the metal layer to the base film by mechanical peeling includes: rolling the transfer film and the base film to transfers the metal layer to the base film.

In the embodiment of the present application, the transfer film is brought into close contact with the base film through pressure rolling, and the adhesive on the base film is capable of peeling off the metal layer from the transfer film through an adhesive force. The pressure rolling method helps the metal layer to be peeled off more evenly and more closely combined with the base film, thereby further improving the mechanical performance of the current collector assembly.

In some embodiments, the transferring the metal layer to the base film includes: heating and rolling the transfer film and the base film to transfers the metal layer to the base film.

In the embodiment of the present application, the transfer film is brought into close contact with the base film through heat rolling, and the adhesive on the base film peels off the metal layer from the transfer film through an adhesive force under the dual action of heating and pressure. On the basis of the pressure, heating is further used to keep the bonding performance of the adhesive in the best state, so that the peeling of the metal layer is more complete and the peeling process is more efficient.

In some embodiments, the providing the transfer film includes: providing the transfer film through a first feeding apparatus.

In some embodiments, the providing the bottom film includes: providing the bottom film through a second feeding apparatus.

In the embodiments of the present application, the transfer film and the bottom film are provided by two feeding apparatuses, which is capable of flexibly controlling the movement states of the transfer film and the bottom film respectively, thereby improving the flexibility of preparing the current collector assembly.

### Description of Drawings

To more clearly describe the technical solutions of the embodiments of the present application, the drawings to be used in the embodiments of the present application will be briefly introduced below. Apparently, the drawings described below are merely some embodiments of the present application. For those of ordinary skills in the art, other drawings may also be obtained based on these drawings without making creative efforts.
Fig. 1 is a structural schematic diagram of a vehicle according to the present application;
Fig. 2 is a schematic structural diagram of a battery according to the present application;
Fig. 3 is a schematic structural diagram of a device for preparing a current collector assembly according to the present application;
Fig. 4 is a schematic structural diagram of a transfer apparatus according to the present application; and
Fig. 5 is a schematic flowchart of a method for preparing a current collector assembly according to an example of the present application.

### Detailed Description

The implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "a plurality of" means two or more; the orientation or positional relationships indicated by the terms "upper", "lower", "left", "right", "inner", and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third", and the like are only used for descriptive purposes, and cannot be construed as indicating or implying relative importance. "Vertical" does not mean being vertical in the strict sense, but within a permissible range of error. "Parallel" does not mean being parallel in the strict sense, but within a permissible range of error.

Orientation words appearing in the following description are all directions shown in the drawings, and do not limit the specific structure of the present application. In the description of the present application, it should also be noted that, unless otherwise expressly specified and defined, the terms "install", "connected", and "connect" should be understood in a broad sense, for example, they may be fixedly connected, detachably connected, or integrally connected; and they may be directly connected or indirectly connected through an intermediate medium. For those of ordinary skills in the art, the specific meanings of the above terms in the present application may be understood according to specific circumstances.

In the present application, the term "and/or" only describes an association relationship between associated objects and represents that three relationships may exist. For example, A and/or B may represent three situations: only A exists, both A and B exist, and only B exists. In addition, the character "/" in the present application generally means that the associated objects before and after it are in an "or" relationship.

Unless otherwise defined, all technical and scientific terms used in the present application have the same meanings as commonly understood by those skilled in the art of the present application. The terms used in the specification of the present application are only for the purpose of describing specific embodiments, but are not intended to limit the present application. The terms "include/comprise" and "have" and any variations thereof in the specification and claims of the present application and in the description of drawings above are intended to cover non-exclusive inclusion. The terms "first", "second", and the like in the specification and claims of the present application or the above drawings are used to distinguish different objects, rather than used to describe specific orders or primary and secondary relationships.

The reference to "embodiment" in the present application means that specific features, structures, or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

In actual production and life, in order to further pursue higher energy density and smaller mass density of batteries, it is necessary to develop thinner and lighter current collectors. Traditional copper foils and aluminum foils are usually prepared by the calendering process. Therefore, due to the limitations of the calendering process, their thicknesses cannot meet requirement of batteries for thinner and lighter current collectors. Therefore, many composite current collectors have been developed. Important components of a composite current collector are a polymeric film and a metal layer on it, both of which constitute a current collector assembly. The preparation of a current collector assembly usually adopts a high-temperature evaporation method to evaporate metal onto a polymeric film to obtain a thin metal layer. However, due to special properties of the polymer, the polymeric film has poor high temperature resistance, and the evaporation process can very easily destroy the mechanical performance of the polymeric film, thus affecting the overall performance of the composite current collector.

In view of this, the embodiments of the present application provide a device and a method for preparing a current collector assembly, which is capable of efficiently preparing a light and thin current collector assembly, and is capable of helping improve the overall performance of the current collector.

In recent years, batteries, as a major power device, have been widely used in electronic devices, electric bicycles, electric motorcycles, electric vehicles, military devices, aerospace, and other fields.

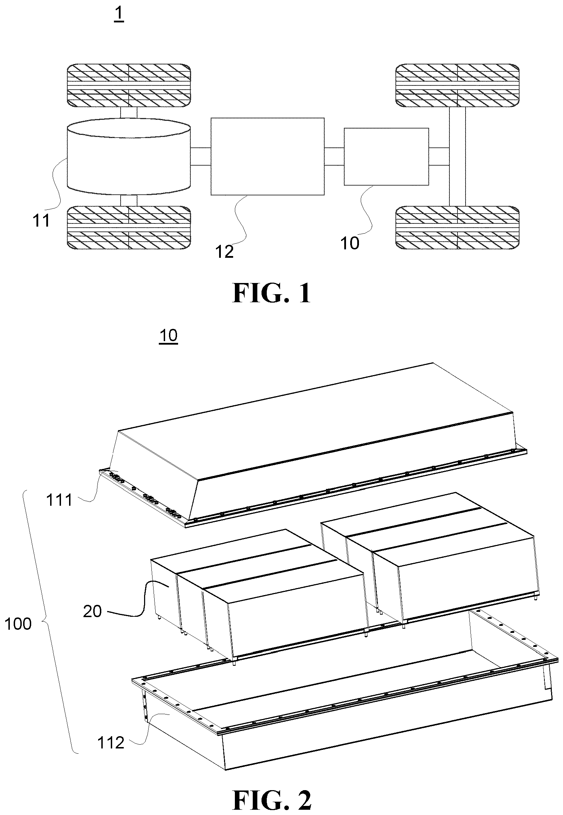

For example, as shown in Fig. 1, a schematic structural diagram of a vehicle 1 according to the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. The interior of the vehicle 1 may be provided with a motor 11, a controller 12, and a battery 10, and the controller 12 is used for controlling the battery 10 to power the motor 11. For example, the battery 10 may be arranged at the bottom or the head or the tail of the vehicle 1. The battery 10 may be used for supplying power to the vehicle 1. For example, the battery 10 may be used as an operating power source of the vehicle 1, which is used for a circuit system of the vehicle 1, for example, for operation power requirements of the vehicle 1 during starting, navigation, and running. In another embodiment of the present application, the battery 10 may serve not only as an operating power supply for the vehicle 1, but also as a driving power source for the vehicle 1, so as to replace or partially replace fuel or natural air to provide driving power for the vehicle 1.

In the present application, the battery refers to a physical module including one or a plurality of battery cells to provide electric energy. For example, the battery mentioned in the present application may include a battery module, a battery pack, or the like. The battery generally includes a box body used for encapsulating one or a plurality of battery cells. The box body can prevent a liquid or another foreign matter from affecting charging or discharging of the battery cell.

In order to meet different power requirements, the battery may include a plurality of battery cells, wherein the plurality of battery cells may be in series connection, parallel connection, or parallel-series connection. The parallel-series connection refers to a combination of series connection and parallel connection. The battery may also be referred to as a battery pack. Optionally, first, a plurality of battery cells may be in series connection, parallel connection, or parallel-series connection to form a battery module, and then, a plurality of battery modules may be in series connection, parallel connection, or parallel-series connection to form a battery. In other words, a plurality of battery cells may directly form a battery, or may first form a battery module, and then, the battery modules form a battery.

For example, as shown in Fig. 2, a schematic structural diagram of a battery 10 according to the present application is shown. The battery 10 may include a plurality of battery cells 20. The quantity of the battery cells 20 may be set to any value. The plurality of battery cells 20 may be in series connection, parallel connection, or parallel-series connection to achieve a larger capacity or power.

Optionally, the battery cell 20 may include a lithium-ion secondary battery, a lithium-ion primary battery, a lithium-sulfur battery, a sodium-lithium-ion battery, a sodium-ion battery, a magnesium-ion battery, or the like, which will not be limited in the embodiments of the present application. In some embodiments, the battery cell 20 may also be called a cell core.

The battery cell 20 includes an electrode assembly and an electrolytic solution, and the electrode assembly is composed of a positive electrode plate, a negative electrode plate, and a separator. The battery cell works mainly relying on the movement of metal ions between the positive electrode plate and the negative electrode plate. The positive electrode plate includes a positive electrode current collector and a positive electrode active material layer, and the positive electrode active material layer is coated on a surface of the positive electrode current collector. The current collector not coated with the positive electrode active material layer protrudes from the current collector coated with the positive electrode active material layer, and the current collector not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, and the negative electrode active material layer is coated on a surface of the negative electrode current collector. The current collector not coated with the negative electrode active material layer protrudes from the current collector coated with the negative electrode active material layer, and the current collector not coated with the negative electrode active material layer serves as a negative tab. The material of the negative electrode current collector may be copper, and the negative electrode active material may be carbon, silicon, or the like. In order to ensure that no fusing occurs when a heavy current passes, there are a plurality of positive tabs which are laminated together, and there are a plurality of negative tabs which are laminated together. The material of the separator may be PP, PE, or the like. In addition, the electrode assembly may be of a wound structure or a laminated structure, which is not limited in the embodiments of the present application.

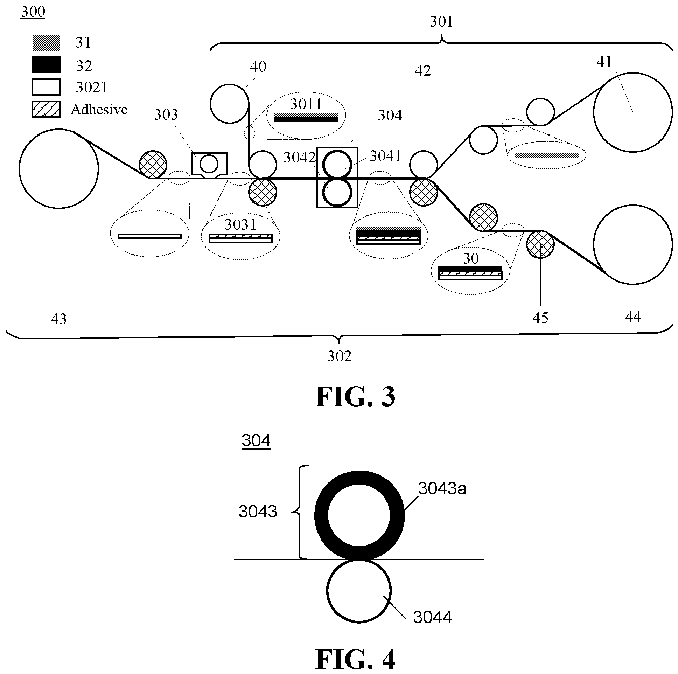

Fig. 3 is a schematic structural diagram of a device 300 for preparing a current collector assembly 30 according to an embodiment of the present application. As shown in the figure, the device 300 includes:
a first feeding apparatus 301 used for providing a transfer film 3011, the transfer film having a base layer 31 and a metal layer 32 formed on it;
a second feeding apparatus 302 used for providing a bottom film 3021, the bottom film 3021 having a first surface and a second surface opposite to the first surface;
a coating apparatus 303 used for applying an adhesive on the first surface to obtain a base film 3031; and
a transfer apparatus 304 used for transferring the metal layer 31 to the base film 3031 to obtain the current collector assembly 30.

Specifically, the transfer film 3011 is composed of the base layer 31 and the metal layer 32 formed on it. The base layer 31 is a substance with stable physical and chemical properties and high temperature resistance. The metal layer 32 formed on it is different from a traditional metal foil, and is not limited by a calendering process, thereby being capable of being prepared very thin. The metal layer 32 on the transfer film 3011 is used to transfer the metal layer 32 to the base film 3031 through adhesive bonding, so as to obtain the current collector assembly 30, which is capable of being used for preparing a light and thin current collector.

In this embodiment, the preparation of the current collector assembly 30 with the thinner metal layer 32 helps achieve the preparation of a thin and light current collector; the transfer of the metal layer 32 through the adhesive is a fast and simple process, which is capable of improving the production efficiency of current collector assembly 30 and the productivity of the device 300 for preparing the current collector assembly. Moreover, there is no effect on physical and chemical properties of the base film 3031, thereby ensuring the mechanical performance of the current collector assembly 30.

Various film layers in the process of preparing the current collector assembly 30 are introduced below.

Optionally, the base layer 31 is a release film.

The release film may also be referred to as peeling film, isolation film, separation film, resist film, release film, thin film, plastic film, masking film, silicone oil film, silicone oil paper, anti-stick film, type paper, slip film, Tina paper, release paper, non-woven film. It is a type of functional film layer that does not produce stickiness or produces slight stickiness after contact with specific materials. Usually, in order to increase the release force of a plastic film, the plastic film is subjected to plasma treatment, fluorine coating, or applying of a silicon release agent to a surface layer of a film material, so that the release film can show a stable release force.

The release film described in the present application is selected from: one or a plurality of PE release film, PET release film, OPP release film, PC release film, PS isolation film, PMMA release film, BOPP release film, PE peeling film, plastic film, TPX release film, PVC peeling film, PTFE release film, PET release film, Teflon release thin film, composite release film, polyphenylene ether peeling film, polytetrafluoroethylene isolation film, polyethylene release film, and composite release film (a release film composed of two or more materials).

In a process of preparing the current collector assembly 30, first, the release film has high thermal stability and is usually capable of withstanding high temperatures above 100°C, so a thin metal layer is capable of being formed on it through a variety of physical and chemical methods. Secondly, the release film has a good release force, which facilitates peeling off of the metal layer on it, thereby providing a good foundation for the complete and efficient transfer of the metal layer.

It should be understood that the present application takes a release film as an example, and the base layer 31 may also be another film layer with a smooth surface and high temperature resistance.

In this embodiment, a release film is used as the base layer 31. The release film has a smooth surface and is resistant to high temperatures, which facilitates the formation of the metal layer 32 thereon and uses the release force of the release film to transfer the metal layer 32, thereby improving the production efficiency and product quality of the current collector assembly 30.

Optionally, the bottom film 3021 is a polymeric film.

The polymeric film, also known as polymer film, is a film made of an organic polymer material and has the advantage of being light and thin. The polymer in the polymeric film described in the present application selects from one or a plurality of polyamide, polyimide, polyethylene terephthalate, polybutylene terephthalate, polyethylene naphthalate, polycarbonate, polyethylene, polypropylene, EPR, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyformaldehyde, polyphenylene ether, polyphenylene sulfide, polyethylene glycol, poly(sulfur nitride) type polymer materials, polyphenylene, polypyrrole, polyaniline, polythiophene, polypyridine, cellulose, starch, protein, epoxy resin, phenolic resin, their derivatives, their cross-linkers, and their copolymers.

In this embodiment, a polymeric film is used as the bottom film 3021. The polymeric film has the characteristics of being light and thin, so that the prepared current collector assembly 30 is lighter and thinner, which facilitates the current collector to be light and thin.

Optionally, the transfer apparatus 304 transfers the metal layer 32 to the base film 3031 by mechanical peeling.

Specifically, the transfer apparatus 304 transfers the metal layer 32 by using a mechanical peeling method, that is, a method of peeling the metal layer 32 from the base layer 31 by applying a mechanical force, such as a friction force and a tension, to the metal layer 32.

In this embodiment, mechanical peeling is used to transfer the metal layer 32, which is capable of being performed at room temperature to avoid a high-temperature process and is capable of effectively ensuring the mechanical performance of the base film 3031, thereby improving the mechanical performance of the current collector assembly 30.

Optionally, in another embodiment, the transfer apparatus 304 transfers the metal layer 32 to the base film 3031 by chemical peeling.

The chemical peeling is a method that utilizes a chemical reaction or different chemical properties of the metal layer 32 and the base film 3031 to peel the metal layer 32 from the base layer 31.

Still referring to Fig. 3, the structure of the device 300 for preparing the current collector assembly 30 will be further introduced below.

Optionally, the transfer apparatus 304 includes: a pressure roller 3041 and a first roller 3042. The pressure roller 3041 and the first roller 3042 roll the transfer film 3011 and the base film 3031 so that the metal layer 32 is transferred to the base film 3031.

Specifically, the pressure roller 3041 and the first roller 3042 are arranged opposite to each other on a feeding route of the transfer film 3011 and the base film 3031. The pressure roller 3041 and the first roller 3042 are capable of forming a rolling pressure on the transfer film 3011 and the base film 3031, so that the transfer film 3011 is brought into close contact with the base film 3031 to form a pulling force between the adhesive and the metal layer 32, and the metal layer 32 is peeled off from the base layer 31. It should be understood that when the transfer film 3011 and the base film 3031 are rolled, the side of the transfer film 3011 having the metal layer 32 is arranged opposite to the side of the base film 3031 coated with the adhesive, so that the metal layer 32 is capable of being in contact with the adhesive.

In this embodiment, the pressure rolling method helps the metal layer 32 to be peeled off more evenly and more closely combined with the base film 3031, thereby further improving the mechanical performance of the current collector assembly 30.

Optionally, as shown in Fig. 4, a schematic structural diagram of another transfer apparatus 304 according to an embodiment of the present application is shown. The transfer apparatus 304 includes: a heating roller 3043 and a second roller 3044. The heating roller 3043 and the second roller 3044 heat and roll the transfer film 3011 and the base film 3031 to transfer the metal layer 32 to the base film 3031.

Specifically, the surface of the heating roller 3043 has a heating layer 3043a that is capable of continuously generating heat to reach a preset temperature. Similar to the structure of pressure rolling, the heating roller 3043 and the second roller 3044 are arranged opposite to each other on the feeding route of the transfer film 3011 and the base film 3031. The heating roller 3043 and the second roller 3044 are capable of forming rolling on the transfer film 3011 and the base film 3031, and the heating roller 3043 heats a rolling region. While the transfer film 3011 is in close contact with the base film 3031, the contact region is heated, so that the adhesive force of the adhesive is stronger, and it is easier to apply a uniform and stable pulling force to the metal layer.

In this embodiment, the heat rolling method is capable of, on the basis of the pressure, further using heating to keep the bonding performance of the adhesive in the best state, so that the peeling of the metal layer 32 is more complete and the peeling process is more efficient.

The device 300 has two feeding apparatuses, namely the first feeding apparatus 301 and the second feeding apparatus 302. It should be understood that the first feeding apparatus 301 and the second feeding apparatus may adopt the same structure or different structures.

Preferably, the first feeding apparatus 301 and the second feeding apparatus 302 have the same structure.

Specifically, the structures of the feeding apparatuses being the same means that the feeding apparatuses perform feeding by using the same principle and the same main components. For example, the first feeding apparatus 301 and the second feeding apparatus 302 both adopt a roll-to-roll structure for feeding; or the first feeding apparatus 301 and the second feeding apparatus 302 both adopt a robotic arm structure for feeding.

In this embodiment, the first feeding 301 apparatus and the second feeding apparatus 302 adopt the same structure, which is beneficial to the consistency of feeding and facilitates the integration and manufacturing of the device 300.

Optionally, still referring to Fig. 3, the first feeding apparatus 301 includes: a first unwinding roll 40, used for transporting the transfer film 3011 in a first feeding direction; a first winding roll 41, used for collecting the transfer film 3011 passing through the transfer apparatus 301; and at least one first guide roller 42 arranged between the first unwinding roll 40 and the first winding roll 41 in the first feeding direction. The first guide roller 42 is used for supporting the transfer film 3011 so that the transfer film 3011 is transported in the arrangement path of the first guide roller 42.

Specifically, there is a roll of transfer film 3011 on the first unwinding roll 40. The rotation of the first unwinding roll 40 is capable of continuously releasing the transfer film 3011 to the transfer apparatus 304. The rotation of the first winding roll 41 is capable of collecting the transfer film 3011 of which the metal layer 32 is peeled off, that is, collecting the base layer 31 or the base layer 31 and a trace amount of the metal layer 32 remaining thereon. The quantity of the first guide rollers 42 may be configured according to processing requirements. At least one of the first unwinding roller 40, the first winding roller 41, and the first guide roller 42 is a driving roller.

Preferably, both the first unwinding roll 40 and the first winding roll 41 are driving rollers.

In this embodiment, the first feeding apparatus 301 is a roll-to-roll feeding apparatus, which is capable of continuously and efficiently transporting the transfer film 3011 to the transfer apparatus 304 to prepare the current collector assembly 30, and is capable of controlling the rotation speeds or directions of the first unwinding roll 40 and first winding roll 41, thereby flexibly controlling a movement state of the transfer film 301 to help improve the efficiency of preparing the current collector assembly 30.

Optionally, the second feeding apparatus 302 includes: a second unwinding roll 43, used for transporting the bottom film 3021 in a second feeding direction; a second winding roll 44, used for collecting the current collector assembly 30; and at least one second guide roller 45 arranged between the second unwinding roll 43 and the second winding roll 44 in the second feeding direction, the second guide roller 45 being used for supporting the bottom film 3021 or the current collector assembly 30 so that the bottom film 3021 or the current collector assembly 30 is transported according to an arrangement path of the second guide roller 45.

Specifically, the second unwinding roll 43 has a roll of bottom film 3021. The rotation of the second unwinding roll 43 is capable of continuously releasing the bottom film 3021 to the coating apparatus 303. The bottom film 3021 is coated with the adhesive by the coating apparatus 303 to form the base film 3031 and is transported to the transfer apparatus 304 by the second feeding apparatus 302. The rotation of the second winding roll 44 is capable of collecting the base film 3031 combined with the metal layer 32, that is, the current collector assembly 30. The quantity of the second guide rollers 45 may be configured according to processing requirements. At least one of the second unwinding roll 43, the second winding roll 44, and the second guide roller 45 is a driving roller.

Preferably, both the second unwinding roll 43 and the second winding roll 44 are driving rollers.

In this embodiment, the second feeding apparatus 302 is a roll-to-roll feeding apparatus, which is capable of continuously and efficiently transporting the bottom film 3021 to the coating apparatus 303 to prepare the base film 3031, and transporting the base film 3031 to the transfer apparatus 304 to prepare the current collector assembly 30; and is capable of controlling the rotation speeds or directions of the second unwinding roll 43 and the second winding roll 44, thereby flexibly controlling movement states of the bottom film 3021, the base film 3031, and the current collector assembly 30, and helping improve the efficiency and flexibility of preparing the current collector 30.

The above first feeding apparatus 301, the second feeding apparatus 302, the coating apparatus 303, and the transfer apparatus 304 may be separate apparatuses and components combined into the device 30; and may also be different functional modules in the same device.

Preferably, the device 300 is an integrated device.

The device 300 for preparing a current collector assembly 30 is an integrated device, and each apparatus is capable of being integrated into the device 300. The prepared current collector assembly 30 can be obtained directly through one device 300, which saves time and device costs of transferring materials between various apparatuses, thereby helping improve the preparation efficiency of the current collector assembly 30.

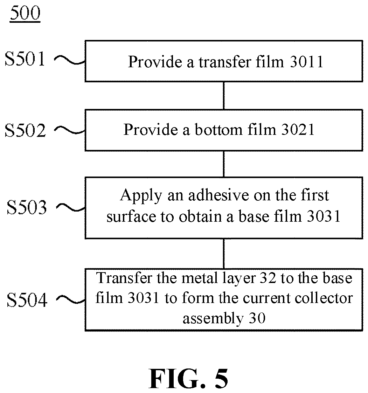

The device 300 for preparing the current collector 30 has been introduced above. The present application further provides a method for preparing a current collector 30. As shown in Fig. 5, the method 500 includes:
S501: Providing a transfer film 3011, the transfer film 3011 having a base layer 31 and a metal layer 32 formed on it;
S502: Providing a bottom film 3021, the bottom film 3021 having a first surface and a second surface opposite to the first surface;
S503: applying an adhesive on the first surface to obtain a base film 3031; and
S504: Transferring the metal layer 32 to the base film 3031 to form the current collector assembly 30.

The above method steps may be performed by the device 300 described in the embodiment of the present application. The relevant physical and chemical properties and examples of the transfer film 3011 and the bottom film 3021 in the above method steps will not be described again here.

In this embodiment, the current collector assembly 30 is prepared by transferring the thinner metal layer 32 on the transfer film 3011 to the base film 3031. The obtained current collector assembly 30 has a thinner metal layer and a lighter mass. Compared with the method of directly preparing the metal layer 32 on the bottom film 3021, the method of transferring the metal layer 32 through the adhesive ensures that the mechanical performance of the base film 3021 will not be affected during the process of preparing the metal layer 32, thereby ensuring the mechanical performance of the current collector assembly 30. In addition, the method 500 is simple in process and can be implemented without a complicated device, so as to be capable of quickly and massively preparing the current collector assemblies 30, improving the manufacturing efficiency of the current collector assemblies 30, and facilitating the mass production of the current collector assemblies 30.

Several methods of forming the metal layer 32 on the transfer film 3011 are introduced below.

Optionally, the transfer film 3011 is obtained by electroplating the metal layer 32 on the base layer 31. The electroplating is a process that uses the principle of electrolysis to electroplate a thin layer of metal or alloy on the surface of certain conductive substances. When a conductive material such as metal or a conductive polymer material is selected as the base layer 31, a metal layer 32 is capable of being formed on its surface by electroplating.

In this embodiment, the metal layer 32 is formed on the surface of the base layer 31 through electroplating. The thickness of the metal layer 32 is thin and may be controlled according to parameters such as the electroplating time, thereby flexibly controlling the thickness of the current collector assembly 30.

Optionally, the transfer film 3011 is obtained by evaporating the metal layer 32 onto the base layer 31. The evaporation, also known as vacuum evaporation, is a vapor deposition method, and refers to a process method of evaporating and vaporizing a coating material (or referred to as a film material) by using a certain heating evaporation method under vacuum conditions, so that particles fly to a surface of a substrate and condense into a membrane. As mentioned in the previous embodiments, the base layer 31 has a smooth surface and high temperature resistance, and a metal layer 32 is capable of being formed on its surface through evaporation.

In this embodiment, the base layer 31 has good stability at high temperatures, and its physical and chemical properties will not be affected by the high temperature during evaporation. Evaporation onto the base layer 31 is capable of obtaining a uniform and thin metal layer 32, and the thickness of the metal layer 32 can be controlled according to parameters such as the evaporation time, thereby flexibly controlling the thickness of the current collector assembly 30.

Optionally, the transfer film 3011 is obtained by magnetron sputtering the metal layer 32 on the base layer 31. The magnetron sputtering, belonging to a type of physical vapor deposition, is a process in which a magnetic field is used to form plasma and electrons on the surface of a target material, and cause the plasma to hit a substrate.

Optionally, the base layer 31 is a release film.

Optionally, the bottom film 3021 is a polymeric film.

The physical and chemical properties and examples of the above release film and polymeric film are consistent with those in the apparatus embodiment, and have effects corresponding to those in the apparatus embodiments. For the sake of simplicity, they will not be described again here.

Optionally, in S504, the metal layer 32 is transferred to the base film 3031 by mechanical peeling.

For example, the metal layer 32 is transferred to the base film 3031 by rolling the transfer film 3011 and the base film 3031; or the metal layer 32 is transferred to the base film 3031 by heating and rolling the transfer film 3011 and the base film 3031.

In the embodiment of the present application, the transfer film 3011 is brought into close contact with the base 3031 film by rolling or heating, and the metal layer 32 is completely peeled off and combined with the base film 3031 to form the current collector assembly 30.

Optionally, in S504, the metal layer 32 is transferred to the base film 3031 by chemical peeling.

Optionally, in S501, the transfer film is provided through the first feeding apparatus 301.

Optionally, S502, the bottom film is provided through the second feeding apparatus 302.

It should be understood that the structures of the first feeding apparatus 301 and the second feeding apparatus 302 may be the same or different.

In this embodiment, the transfer film 3011 and the bottom film 3031 are provided respectively by two feeding apparatuses, which is capable of flexibly controlling the movement states of the transfer film 3011 and the bottom film 3031 respectively, thereby facilitating the metal layer to be in better contact with the adhesive, and helping improve the quality of the prepared current collector assembly 30.

In summary, the embodiments of the present application provide a device 300 and a method 500 for preparing a current collector assembly 30. The current collector assembly 30 prepared by the device 300 has the advantages of being light and thin, and having a good mechanical performance, and is capable of be used for preparing ultra-thin current collectors. Moreover, the production efficiency of the device 300 is high, which helps improve the production capacity of preparing the current collector assembly 30. Through the method 500, a light and thin current collector assembly 30 with a good mechanical performance is capable of being prepared, and the steps of the method 500 are simple and easy to implement, and is capable of continuously and efficiently preparing the current collector assemblies 30 to help improve the production efficiency of the current collector.

Although the present application has been described with reference to the preferred embodiments, various improvements may be made thereto and components thereof may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A device for preparing a current collector assembly, the device comprising:
a first feeding apparatus used for providing a transfer film, the transfer film having a base layer and a metal layer formed on it;
a second feeding apparatus used for providing a bottom film, the bottom film having a first surface and a second surface opposite to the first surface;
a coating apparatus used for applying an adhesive on the first surface to obtain a base film; and
a transfer apparatus used for transferring the metal layer to the base film to obtain the current collector assembly.

2. The device according to claim 1, wherein the base layer is a release film.

3. The device according to claim 1 or 2, wherein the bottom film is a polymeric film.

4. The device according to any one of claims 1 to 3, wherein the transfer apparatus transfers the metal layer to the base film by mechanical peeling.

5. The device according to claim 4, wherein the transfer apparatus comprises:
a pressure roller and a first roller, the pressure roller and the first roller rolling the transfer film and the base film so that the metal layer is transferred to the base film.

6. The device according to claim 4, wherein the transfer apparatus comprises:
a heating roller and a second roller, the heating roller and the second roller heating and rolling the transfer film and the base film so that the metal layer is transferred to the base film.

7. The device according to any one of claims 1 to 6, wherein the first feeding apparatus and the second feeding apparatus have the same structure.

8. The device according to claim 7, wherein the first feeding apparatus comprises:
a first unwinding roll used for conveying the transfer film in a first feeding direction;
a first winding roll used for collecting the transfer film after passing through the transfer apparatus; and
at least one first guide roller arranged between the first unwinding roll and the first winding roll in the first feeding direction, the first guide roller being used for supporting the transfer film, so that the transfer film is transported according to an arrangement path of the first guide roller.

9. The device according to claim 7, wherein the second feeding apparatus comprises:
a second unwinding roll used for conveying the bottom film in a second feeding direction;
a second winding roll used for collecting the current collector assembly; and
at least one second guide roller arranged between the second unwinding roll and the second winding roll in the second feeding direction, the second guide roller being used for supporting the bottom film or the current collector assembly so that the bottom film or the current collector assembly is transported according to an arrangement path of the second guide roller.

10. The device according to claim 8 or 9, wherein the device is an integrated device.

11. A method for preparing a current collector assembly, the method comprising:
providing a transfer film, the transfer film having a base layer and a metal layer formed on it;
providing a bottom film, the bottom film having a first surface and a second surface opposite to the first surface;
applying an adhesive on the first surface to obtain a base film; and
transferring the metal layer to the base film to form the current collector assembly.

12. The method according to claim 11, wherein the transfer film is obtained by electroplating the metal layer on the base layer.

13. The method according to claim 11, wherein the transfer film is obtained by evaporating the metal layer onto the base layer.

14. The method according to any one of claims 11 to 13, wherein the base layer is a release film.

15. The method according to any one of claims 11 to 14, wherein the bottom film is a polymeric film.

16. The method according to any one of claims 11 to 15, wherein the transferring the metal layer to the base film comprises:
transferring the metal layer to the base film by mechanical peeling.

17. The method according to claim 16, wherein the transferring the metal layer to the base film by mechanical peeling comprises:
rolling the transfer film and the base film so that the metal layer is transferred to the base film.

18. The method according to claim 16, wherein the transferring the metal layer to the base film comprises:
heating and rolling the transfer film and the base film so that the metal layer is transferred to the base film.

19. The method according to any one of claims 11 to 18, wherein the providing the transfer film comprises:
providing the transfer film through a first feeding apparatus.

20. The method according to any one of claims 11 to 19, wherein the providing the bottom film comprises:
providing the bottom film through a second feeding apparatus.
